(19) Europäisches Patentamt

European Patent Office

Office européen des brevets

(11) Publication number: **0 137 680**
**B1**

(12) **EUROPEAN PATENT SPECIFICATION**

(45) Date of publication of patent specification: **31.01.90**

(21) Application number: **84305780.3**

(22) Date of filing: **23.08.84**

(51) Int. Cl.⁵: **B 23 B 27/16**

(54) **Cutting tool.**

(30) Priority: **23.08.83 US 526055**

(43) Date of publication of application:
**17.04.85 Bulletin 85/16**

(45) Publication of the grant of the patent:
**31.01.90 Bulletin 90/05**

(84) Designated Contracting States:
**BE DE FR GB NL SE**

(56) References cited:
**GB-A-2 021 992**
**US-A-3 156 032**
**US-A-3 754 309**
**US-A-4 028 782**

(73) Proprietor: **Sandvik, Inc.**
**1702 Nevins Road**
**Fair Lawn New Jersey 07410 (US)**

(72) Inventor: **Benson, Lloyd Ray**
**10223 Kirkhill**
**Houston Texas 77089 (US)**

(74) Representative: **Purvis, William Michael**
**Cameron et al**
**D. Young & Co. 10 Staple Inn**
**London WC1V 7RD (GB)**

Courier Press, Leamington Spa, England.

## Description

This invention relates to a cutting tool and, more particularly, to a cutting tool for threading and grooving operations, according to the precharacterizing part of claim 1. Such a tool is known from US-A-4,028,782.

Double ended invertable inserts have been used in cutting tools for internal and external threading and grooving operations. In such systems, a clamp is provided for the tool holder, which clamp is located on the top portion of the tool holder thereby removing it from interference with the workpiece.

In such systems, the cutting insert is subjected to high downwardly and laterally extending loads from the workpiece. Because of the rigidity needed for close tolerance operations, it is imperative that the insert be held in the tool holder without play.

One such system presently in use is disclosed in US-A-3,754,309 (Jones et al). This system uses a diagonal notch machined in a double ended insert and a two legged clamp, one of the legs being secured by a recess in the tool holder and the other leg being of rounded configuration and acting within the diagonal notch. Force is applied to the clamp and, consequently, the insert by the tightening action of a cap screw between the clamp and the tool holder.

Such a system is, however, disadvantageous in that it can lead to a loosening of the insert in the pocket thereby necessitating a rework or scrapping of the workpiece. Further, it is essential in such device that the insert be firmly positioned in the holding pocket prior to tightening the clamp. This is so because the point loading caused by the rounded leg of the clamp against the non-precision notch of the insert creates forces that do not necessarily direct the insert into the innermost position within the pocket of the tool holder.

US-A-4,028,782 (Stansak) discloses a system wherein the middle portion of a double ended cutting insert is formed with a notch which provides an engaging surface for one leg of a two legged clamp, the engaging surface forming a compound angle with a major surface of the insert, with the compound angle comprising 10° to 20° to an indexing surface and 3° to 30° to a plane defined by the major surface.

According to the invention, there is provided a cutting tool comprising a tool holder, a pocket in the tool holder defined by a first sidewall, a bottom wall and a rear wall, a cutting insert receivable by the pocket and defined by an outer side surface, an upper surface and an inner sidewall surface, a clamp operable to hold the insert in the pocket and connection means to connect the clamp to the tool holder, wherein the insert has a wedge shaped recess having a bottom face extending from the outer side surface to the upper surface and, defining the recess, a rearwardly located face extending downwardly from the upper surface and terminating at the bottom face of the recess, the clamp has a leg portion complementary to the recess and the leg portion has a first face to bear against the bottom face, the clamp being operable to exert a fastening force on the bottom face of the recess thereby to seat the insert against the first sidewall and the bottom wall, characterised in that the leg portion has a second face to bear against the rearwardly located face, and the clamp is operable to exert a fastening force on the rearwardly located face of the recess thereby to seat the insert against the rear wall of the pocket in the holder.

The invention is diagrammatically illustrated by way of example with reference to the accompanying drawings, in which:

Figure 1 is a perspective assembled view of a tool holder and cutting insert of a securing system for a cutting tool according to the invention;

Figure 2 is a plan view of a tool holder and cutting insert of Figure 1;

Figure 3 is a side view of the clamp as seen in the direction VIEW III indicated in Figure 2;

Figure 4 is a plan view of the clamp of Figure 3;

Figure 5 is a side view of the cutting insert as seen in the direction VIEW V indicated in Figure 2;

Figure 6 is a cutaway view taken on line VI-VI of Figure 5;

Figure 7 is a side view of the tool holder and cutting insert of Figure 2 illustrating the clamping force effect; and

Figure 8 is a partial cutaway view taken on line VIII-VIII of Figure 7.

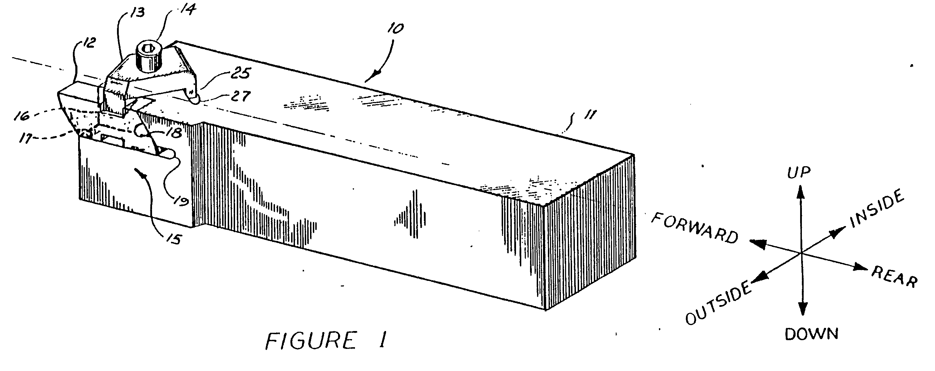

Referring to the drawings, an assembled cutting tool is shown generally at 10 in Figure 1. It comprises a tool holder or bar 11, a cutting insert 12, a clamp 13 and a fastening means in the form of a socket head cap screw 14.

A pocket generally shown at 15 is machined in the tool holder 11. The pocket 15 comprises a first sidewall 16, a bottom wall 17 and a rear wall 18. A stress relief diameter 19 is machined in the rear wall 18 and extends inwardly to the first sidewall 16. It is noted that the directions, "inwardly", "outwardly", etc. are used throughout this specification in the sense that those directions are as indicated in Figure 1.

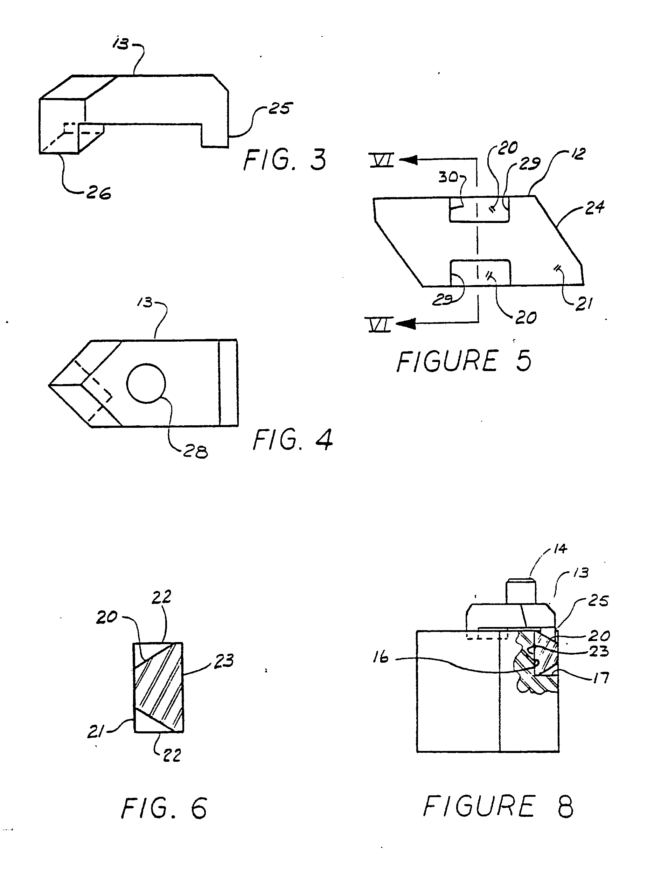

The cutting insert 12 is shown more clearly in Figures 5 and 6. It comprises a carbide material with a wedge shaped recess 20 machined on both the upper and lower surfaces for invertability purposes. The cutting insert 12 has an outer side surface 21, an upper surface 22, an inner side surface 23 and a rear wall 24. Because of symmetry, only the upper recess 20 will be described. The recess 20 extends diagonally from the outer side surface 21 to the upper surface 22 of the cutting insert 12. The inner side surface 23 of the cutting insert 12 extends rearwardly from the forward wall and terminates at the rear wall 24 of the cutting insert 12. The rear wall 24 of the insert 12 is machined on an angle such that it will fit the rear wall 18 of the tool holder 11. The wedge shaped recess 20 is also defined by a face 29 extending perpendicularly downwardly from the upper surface 22 of the cutting insert 12. The face 29 forms the rearward portion of the wedge shaped recess 20. A similar face defines the forward portion 30 of the wedge shaped recess 20.

The clamp 13 is shown more clearly in Figures 3 and 4. It includes a first leg portion 25 and a second leg portion 26. The first leg portion 25 is machined to fit a recess 27 (Figure 1) in the tool holder 11. The second leg portion 26 is machined in the shape of a wedge which is complementary to the wedge shaped recess 20 of the cutting insert 12 as best seen in Figure 8. A hole 28 is drilled through the clamp 13 and serves to allow insertion of a socket head cap screw 14 in a threaded connection (not shown) in the tool holder 11.

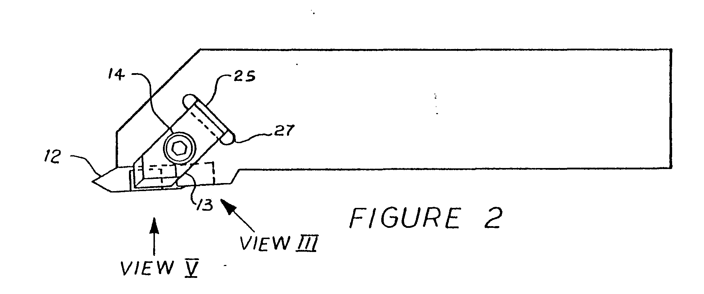

In operation and with reference to Figures 2, 7 and 8, the appropriate cutting insert 12 is inserted in the pocket 15 and the clamp 13 is positioned with the second leg portion 26 on the wedge shaped recess 20 of the insert 12 and the first leg portion 25 in the recess 27 of the tool holder 11. The socket head cap screw 14 is inserted through the hole 28 (Figure 4) and engaged in the threaded connection (not shown) in the tool holder 11. The socket head cap screw 14 is then tightened.

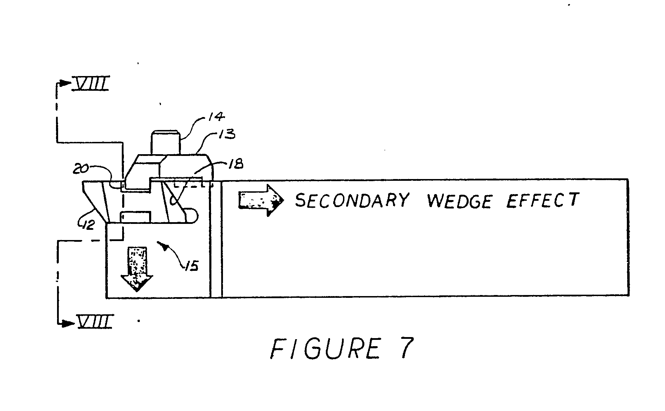

As the tightening action proceeds, the cap screw 14 will force the second leg portion 26 downwardly since the first leg portion 25 is flush with the bottom of the recess 27. The second leg portion 26 will therefore apply a force to the recess 20 of the insert 12 in the sense shown in Figure 7. This is the primary restraining force created.

As the tightening continues, the second leg portion 26 will contact the rear face 29 (Figure 5) of the wedge shaped recess 20 and a secondary restraining or wedge effect will occur as depicted in Figure 7. Thus, the tightening will move the insert 12 inwardly, rearwardly and downwardly in the pocket 15 of the tool holder 11.

When the tightening is complete, the cutting insert 12 will be held securely in the pocket 15 with the first sidewall 16 of the tool holder 11 in firm contact with the inner side surface 23 of the insert 12, the rear wall 24 of the insert 12 in firm contact with the rear wall 18 of the tool holder 11, and the lower surface 22 in firm contact with the bottom wall 17 of the pocket 15.

Different cutting inserts may be used depending on the particular cutting tool application being considered. For example, the insert 12 depicted in Figure 2 may be used for threading operations while the insert depicted in Figure 1 may be used for grooving operations.

## Claims

1. A cutting tool comprising a tool holder (11), a pocket (15) in the tool holder defined by a first sidewall (16), a bottom wall (17) and a rear wall (18), a cutting insert (12) receivable by the pocket (15) and defined by an outer side surface (21), an upper surface (22) and an inner sidewall surface (23), a clamp (13) operable to hold the insert (12) in the pocket (15) and connection means (14) to connect the clamp to the tool holder (11), wherein the insert (12) has a wedge shaped recess (20) having a bottom face extending from the outer side surface (21) to the upper surface (22) and, defining the recess (20), a rearwardly located face (29) extending downwardly from the upper surface (12) and terminating at the bottom face of the recess (20), the clamp (13) has a leg portion (26) complementary to the recess (20) and the leg portion (26) has a first face to bear against the bottom face, the clamp (13) being operable to exert a fastening force on the bottom face of the recess (20) thereby to seat the insert (12) against the first sidewall (16) and the bottom wall (17), characterised in that the leg portion (26) has a second face to bear against the rearwardly located face (29), and the clamp (13) is operable to exert a fastening force on the rearwardly located face (29) of the recess (20) thereby to seat the insert against the rear wall (18) of the pocket (15) in the holder (11).

2. A cutting tool according to claim 1, wherein the insert (12) has a rear face (24) located adjacent the rear wall (18) of the pocket.

3. A cutting tool according to claim 2, wherein the clamp (13) is operable to bring the inner sidewall surface (23) and the rear face (24) of the insert (12) into contact with the first sidewall (16) and the rear wall (18) of the pocket (15), respectively.

4. A cutting tool according to claim 3, wherein said clamp is operable to exert inwardly, rearwardly and downwardly directed retaining forces on the bottom face when the clamp (13) is connected to the tool holder.

5. A cutting tool according to claim 2, wherein the insert (12) is substantially symmetrical about an axis located centrally in and perpendicular to the outer side surface (21).

6. A cutting tool according to claim 5, wherein the insert (12) is invertible in the pocket (15) upon a 180° rotation of the insert about said axis.

**Patentansprüche**

1. Schneidwerkzeug mit einem Werkzeughalter (11), einem Fach (15) in dem Werkzeughalter, welches durch eine erste Seitenwand (16), einen Boden (17) und eine Rückwand (18) definiert ist, einem Schneideinsatz (12), welcher in dem Fach (15) aufnehmbar und durch eine äußere Seitenfläche (21), eine obere Fläche (22) und eine innere Seitenwandfläche (23) definiert ist, einer Klammer (13), welche so betätigbar ist, daß sie den Einsatz (12) in dem Fach (15) hält, und Verbindungsmitteln (14), zum Verbinden der Klammer mit dem Werkzeughalter (11), wobei der Einsatz (12) eine keilförmige Aussparung (20) aufweist, die eine Grundfläche hat, welche sich von der äußeren Seitenfläche (21) zur oberen Fläche (22) erstreckt und, die Aussparung (20) definierend, eine rückwärtig angeordnete Fläche (29), welche sich von der oberen Fläche (22) nach unten erstreckt und an dem Boden der Aussparung (20) endet, wobei die Klammer (13) ein Schenkelteil (26) hat, das komplementär zu der Aussparung (20) ist und das Schenkelteil (26) eine erste Fläche hat, die sich an dem Boden abstützt, wobei die Klammer (13) so betätigbar ist, daß sie eine Befestigungskraft auf den Boden der Aussparung (20) ausübt, um dadurch den Einsatz (12) gegen die erste Seitenwand (16) und den Boden (17) in seinen Sitz zu drücken, dadurch gekennzeichnet, daß das Schenkelteil (26) eine zweite Fläche für die Abstützung gegen die rückwärtig angeordnete Fläche (29) hat, und daß die Klammer (13) so betätigbar ist, daß sie eine Befestigungskraft auf die rückwärtig angeordnete Fläche (29) der Aussparung (20) ausübt, um dadurch den Einsatz gegen die rückwärtige Wand (18) des Faches (15) in dem Halter (11) in seinen Sitz zu drücken.

2. Schneidwerkzeug nach Anspruch 1, wobei der Einsatz (12) eine hintere Fläche (24) hat, die unmittelbar neben der Rückwand (18) des Faches angeordnet ist.

3. Schneidwerkzeug nach Anspruch 2, wobei die Klammer (13) so betätigbar ist, daß sie die innere Seitenwandfläche (23) und die rückwärtige Fläche (24) des Einsatzes (12) in Berührung mit der ersten Seitenwand (16) bzw. der Rückwand (18) des Faches (15) bringt.

4. Schneidwerkzeug nach Anspruch 3, wobei die Klammer (13) so betätigbar ist, daß sie nach innen, hinten und unten gerichtete Haltekräfte auf den Boden ausübt, wenn sie mit dem Werkzeughalter verbunden ist.

5. Schneidwerkzeug nach Anspruch 2, wobei der Einsatz (12) im wesentlichen symmetrisch zu einer Achse ist, die im Zentrum und senkrecht zu der äußeren Seitenfläche (21) verläuft.

6. Schneidwerkzeug nach Anspruch 5, wobei der Einsatz (12) durch eine Drehung um 180° um die erwähnte Achse in dem Fach (15) umdrehbar ist.

**Revendications**

1. Outil de coupe comprenant un porte-outil (11), un logement (15) dans le porte-outil défini par une première paroi latérale (16), une paroi de fond (17) et une paroi arrière (18), un élément de coupe rapporté (12) pouvant être reçu par le logement (15) et défini par une surface latérale extérieure (21), une surface supérieure (22) et une surface latérale intérieure (23), un crampon (13) pouvant être actionné pour maintenir l'élément rapporté (12) dans le logement (15) et un moyen de connexion (14) pour relier le crampon au porte-outil (11), dans lequel l'élément rapporté (12) comporte un évidement en forme de coin (20) présentant une surface de fond s'étendant de la surface latérale extérieure (21) à la surface supérieure (22) et, définissant l'évidement (20), une surface située vers l'arrière (29) s'étendant vers le bas à partir de la surface supérieure (12) et se terminant à la surface de fond de l'évidement (20), le crampon (13) comporte une portion de branche (26) complémentaire de l'évidement (20) et la portion de branche (26) comporte une première surface pour porter contre la surface de fond, le crampon (13) pouvant être actionné pour exercer une force de fixation sur la surface de fond de l'évidement (20) afin d'asseoir l'élément rapporté (12) contre la première paroi latérale (16) et la paroi de fond (17), caractérisé en ce que la portion de branche (26) comporte une seconde surface pour porter contre la surface située vers l'arrière (29), et en ce que le crampon (13) peut être actionné pour exercer une force de fixation sur la surface située vers l'arrière (29) de l'évidement (20) afin d'asseoir l'élément rapporté contre la paroi arrière (18) du logement (15) dans le porte-outil (11).

2. Outil de coupe selon la revendication 1, dans lequel l'élément rapporté (12) comporte une surface arrière (24) située adjacente à la paroi arrière (18) du logement.

3. Outil de coupe selon la revendication 2, dans lequel le crampon (13) peut être actionné pour amener la surface latérale intérieure (23) et la surface arrière (24) de l'élément rapporté (12) en contact avec la première paroi latérale (16) et la paroi arrière (18) du logement (15), respectivement.

4. Outil de coupe selon la revendication 3, dans lequel ledit crampon peut être actionné pour exercer des forces de maintien dirigées vers l'intérieur, vers l'arrière et vers le bas sur la surface de fond lorsque le crampon (13) est relié au porte-outil.

5. Outil de coupe selon la revendication 2, dans lequel l'élément rapporté (12) est substantiellement symétrique selon un axe situé centralement dans la surface latérale extérieure (21) et perpendiculairement à celle-ci.

6. Outil de coupe selon la revendication 5, dans lequel l'élément rapporté (12) est permutable dans le logement (15) selon une rotation de 180° de l'élément rapporté autour dudit axe.

FIGURE 1

EP 0 137 680 B1

FIGURE 2

VIEW III

VIEW V

13

12

14

25

27

*13*

*25*

*26*

FIG. 3

*30* *20* *29* *12*

VI

*24*

*29* *20* *21*

VI

FIGURE 5

*13*

*28*

FIG. 4

*22*

*20*

*23*

*21*

*22*

FIG. 6

*14*

*13*

*25*

*20*

*16*

*23*

*17*

FIGURE 8

3

SECONDARY WEDGE EFFECT

14
13
18

15

20

12

VIII

VIII

FIGURE 7

4